# EUROPEAN PATENT APPLICATION

(11) **EP 4 807 337 A2**
(43) Date of publication of application: **16.09.2026**
(21) Application number: 26159503.7
(22) Date of filing: 19.02.2026
(51) Int. Cl.: G01M 3/40

(54) **METHOD AND APPARATUS FOR GAS-LEAK DETECTION**

(30) Priority: 21.02.2025 GB 202502579
(71) Applicant: Green Running Limited, Bath BA1 1UD (GB)
(72) Inventor: DAVIES, Peter Gareth, Bath, BA1 1UD (GB); STRICKLAND, James, Bath, BA1 1UD (GB); MILLER, Luke, Bath, BA1 1UD (GB)
(74) Representative: Marks & Clerk LLP

(57) **Abstract**

A method for monitoring a device operating a thermodynamic cycle, the method comprising obtaining at least one of a power, voltage or current signal of the device, determining at least one of voltage or current magnitudes at one or more harmonic frequencies of a base frequency of the signal, performing classification of a filling state of the device using a trained machine learning classifier and on at least one of timing characteristics of the operation of the device and at least one of voltage, current or power characteristics of the signal. The method can be used to classify a refrigerant gas filling state of the device and/or detect an error of the filling state, such as a sudden or gradual leak of refrigerant gas.

## Description

### FIELD

The present invention relates to a method and apparatus for detecting a coolant or refrigerant gas or liquid leak and in particular for detecting a gas or liquid leak in an air conditioning unit or in a refrigeration unit.

### BACKGROUND

The number of air conditioning units and refrigeration units installed worldwide is steadily increasing, not least in light of increasing outside temperatures and population growth. The efficiency of such units depends on their correct installation and setup, particularly on the correct filling state of the heat exchange fluid used. An air conditioning unit or a refrigeration unit that is not operated under its most efficient operating conditions consumes more energy than is needed for a desired heating or cooling performance. This is undesirable not only because of the associated increase in operating cost but also because of the additional strain the associated increased energy consumption puts on the electricity grid generally and during extreme temperature events as well as a potential reduction in the overall life of the unit.

Whilst such units should undergo regular maintenance, long time periods may separate the relevant maintenance events. A gas leak in aunit can therefore remain undetected for long periods of time that may stretch to several weeks or even several months. It is desirable to detect gas leaks more immediately than would be the case during routine maintenance, ideally immediately when the gas leak occurs.

According to an aspect of the present invention there is provided a method for monitoring a device operating a thermodynamic cycle, the method comprising:
obtaining at least one of a power, voltage or current signal of the device;
determining at least one of voltage or current magnitudes at one or more harmonic frequencies of a base frequency of the signal;
performing classification of a filling state of the device using a trained machine learning classifier and on at least one of:
   timing characteristics of the operation of the device; and
   at least one of voltage, current or power characteristics of the signal.

In embodiments, the classification provides an absolute filling state, expressed either in terms of the amount of refrigerant gas present in the device or as a percentage filling state. In other embodiments, the classification provides an indication that the filling state is erroneous.

Device operating thermodynamic cycles include air conditioning units, heat pumps and refrigeration units. More generally, devices operating thermodynamic cycles include devices that affect a heating or cooling in one part of the thermodynamic cycle and a corresponding cooling or heating in another part of the thermodynamic cycle by pumping a refrigerant gas around the thermodynamic cycle whilst subjecting it to expansion and compression in predetermined locations along the thermodynamic cycle.

In an embodiment the least one of voltage, current or power characteristics of the signal include a property of the determined at least one of voltage or current magnitudes at the one or more harmonic frequencies and/or a property of the signal in the time domain.

In an embodiment the property of the determined at least one of voltage or current magnitudes at the one or more harmonic frequencies is one or more of:
at least one of the determined voltage and/or the current at the at least at one or more harmonic frequencies; or
at least one of a voltage or a current of the total harmonic distortion one or more of all of power supplying or null conductors of the device.

In an embodiment the property of the signal in the time domain is at least one of:
a moving average of the amount of power consumed by the device in an operational period; or
mean voltage and/or current values and/or a standard deviation of voltage and/or current values on a phase or a null conductor of a power supply of the device.

In an embodiment the timing characteristics of the operation of the device includes a length of an operational period of the device and/or a determination of the presence or absence of standby periods.

In an embodiment the trained machine learning classifier is at least one of decision tree classifier, a support vector machine, gradient boosting, a LSTM, a recurrent neural network, a convolutional neural network, a Naive Bayes classifier, a neural network.

According to an aspect of the present invention there is provided a method for monitoring a device operating a thermodynamic cycle, the method comprising:
obtaining a power or current signal of the device;
calculating a frequency spectrum of the trace and obtaining magnitudes of the spectrum at a plurality of frequencies of the spectrum;
performing classification of the presence or absence of a ramp in the trace using a classifier and at least based on the magnitudes the plurality of frequencies; and
outputting an indication that a ramp was detected in the trace based on a categorisation that the trace comprises a ramp.

In an embodiment the classifier is a trained machine learning classifier.

In an embodiment the machine learning classifier is a random forest classifier.

In an embodiment the random forest classifier comprises a plurality of random forests and wherein hyperparameters in the random forests are the same.

In an embodiment the step of calculating the frequency spectrum of the trace and obtaining the magnitudes of the spectrum at the plurality of frequencies of the spectrum comprises, after the frequency spectrum has been calculated, generating a normalised frequency spectrum by normalising the frequency spectrum so that all normalised spectral amplitudes fall within a predetermined range, wherein the magnitudes of the spectrum at the plurality of frequencies are magnitudes of the normalised frequency spectrum.

According to another embodiment there is provided a computer program product comprising program instructions for execution by one or more processors, the program instructions, when executed by the one or more processors, causing the one or more processors to perform any of the above discussed methods.

In an embodiment the computer program product is a non-volatile memory storing the program instructions.

According to another embodiment there is provided an apparatus for monitoring a device operating a thermodynamic cycle, the apparatus configured to:
obtain at least one of a power, voltage or current signal of the device;
determine at least one of voltage or current magnitudes at one or more harmonic frequencies of a base frequency of the signal;
perform classification of a filling state of the device using a trained machine learning classifier and on at least one of:
   timing characteristics of the operation of the device; and
   at least one of voltage, current or power characteristics of the signal.

According to another embodiment there is provided an apparatus for monitoring a device operating a thermodynamic cycle, the apparatus configured to:
obtain a power or current signal of the device;
calculate a frequency spectrum of the trace and obtain magnitudes of the spectrum at a plurality of frequencies of the spectrum;
perform classification of the presence or absence of a ramp in the trace using a classifier and at least based on the magnitudes the plurality of frequencies; and
output an indication that a ramp was detected in the trace based on a categorisation that the trace comprises a ramp.

In an embodiment the machine learning classifier is a random forest classifier.

In an embodiment the random forest classifier comprises a plurality of random forests and wherein hyperparameters in the random forests are the same.

In an embodiment the step of calculating the frequency spectrum of the trace and obtaining the magnitudes of the spectrum at the plurality of frequencies of the spectrum comprises, after the frequency spectrum has been calculated, generating a normalised frequency spectrum by normalising the frequency spectrum so that all normalised spectral amplitudes fall within a predetermined range, wherein the magnitudes of the spectrum at the plurality of frequencies are magnitudes of the normalised frequency spectrum.

### BRIEF DESCRIPTION OF THE DRAWINGS

An embodiment of the present invention will now be described, by way of example only, and with reference to the following drawings, in which:
Fig. 1a shows high speed data of the real power consumed by a commercial open face refrigeration unit;
Fig. 1b shows the real power consumed by the same unit as in Fig. 1a but different faulty reduced refrigerant filling states;
Fig. 1c shows the real power consumed by the same unit as in Fig. 1a but different faulty over filled refrigerant filling state;
Fig. 1d shows the real power consumed by the same unit as that of Figs. 1a, with a gradual refrigerant leak depleting the refrigerant filling level over time;
Fig. 2 shows power spectral densities of the graphs shown in Figs. 1a to 1d;
Fig. 3 illustrates a method 300 for calculating harmonic energies;
Fig. 4 shows a validation confusion matrix for a trained model;
Fig. 5a shows a power trace of a Mitsubishi SRK45ZSP-W split-unit air conditioning unit obtained on 1 September 2023 with varying filling states of heat exchange fluid;
Fig. 5b shows a power trace of the Mitsubishi SRK45ZSP-W split-unit air conditioning unit obtained on 2 September 2023, wherein the amount of heat exchange fluid in the system was first deliberately reduced and then increased in a "U-shaped" filling pattern;
Fig. 5c shows a power trace of the Mitsubishi SRK45ZSP-W split-unit air conditioning unit obtained on 7 May 2022, wherein the amount of heat exchange fluid in the system was constant throughout the day at an approximately 47% filling state;
Fig. 6a shows and uncalibrated power trace acquired over a 20 min period on 2 September 2023;
Fig. 6b the distributions of PSD magnitudes at 550Hz of the power trace at the 100% and 91% filling states shown in Fig. 6a respectively;
Fig. 6c the distributions of PSD magnitudes at 650Hz of the power trace at the 100% and 91% filling states shown in Fig. 6a respectively;
Fig. 6d the distributions of PSD magnitudes at 850Hz of the power trace at the 100% and 91% filling states shown in Fig. 6a respectively;
Fig. 7 shows a flow diagram of how ramp behaviour in the power trace is detected in an embodiment;
Fig. 8a shows an example power trace;
Fig. 8b shows the mean classification performance of four classifiers in an ensemble of an embodiment;
Fig. 9 shows the classification performance of a classifier of an embodiment;
Fig. 10 illustrates a system for processing a power trace.

### DETAILED DESCRIPTION

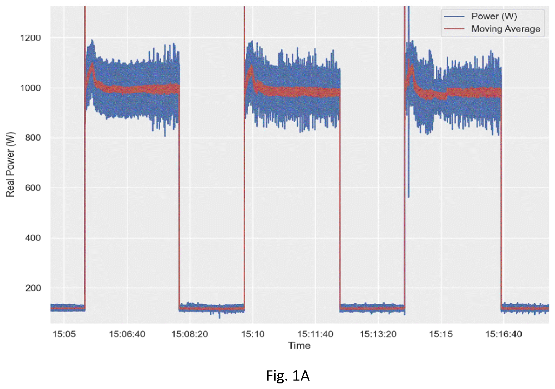

Fig. 1a shows high speed data of the real power consumed by a commercial open face refrigeration unit commonly found in supermarkets for keeping goods chilled yet readily accessible by shoppers. As can be seen, the refrigeration unit actives cooling cycles intermittently. This is a feature of the refrigeration unit, whereby the refrigeration unit starts and stops cooling cycles based on a detected temperature in a predetermined thermometer position within the unit. Fig. 1a shows the unit with a 100% (150g) refrigerant fill, i.e. the unit working at the intended refrigerant level. It can be seen that the average power consumption during a refrigeration cycle is about 1000W.

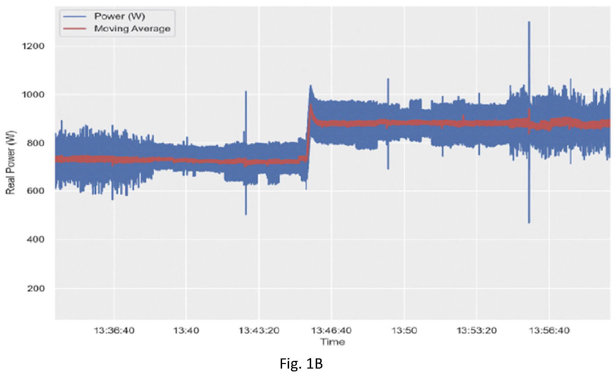

Fig. 1b shows the real power consumed by the same unit but with a refrigerant filing state of about 1/3 (50g) at the left-hand side of the Fig 1b. and a refrigerant filing state of about 2/3 (100g) at the right-hand side of the Fig. 1b. Noticeably, the refrigeration unit operates a continuous cooling cycle for both filling states, forgoing the rest periods shown in Fig. 1a. This is because the desired temperature within the refrigeration unit, as sensed by the unit's temperature sensor or sensors, is no longer achieved. This also explains the lower average power consumption of around 750W for a 50g refrigerant filling state and of around 900W for a 100g refrigerant filling state

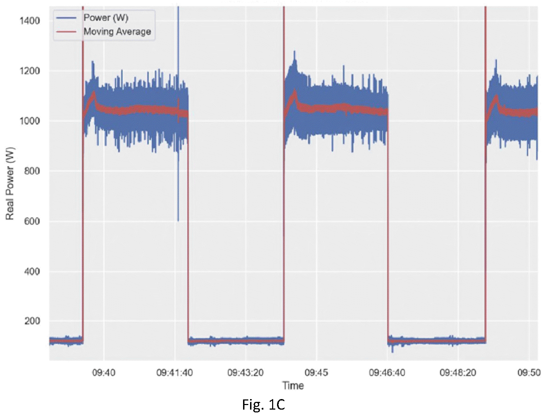

Fig. 1c shows a scenario opposite to that shown in Fig. 1b. Fig. 1c in particular shows the real power consumed by the same unit as that of Figs. 1a and 1b but with a 120% (180g) refrigerant filling state. As can be seen, at this elevated filling state, rest periods are again adopted by the refrigeration unit. Whilst this clearly indicates that the unit performs is refrigeration function as desired, it is to be noted that the average power required for this purpose is elevated to about 1100W, i.e. an extra 10% of power are consumed when compared to the operating state the unit has been designed for.

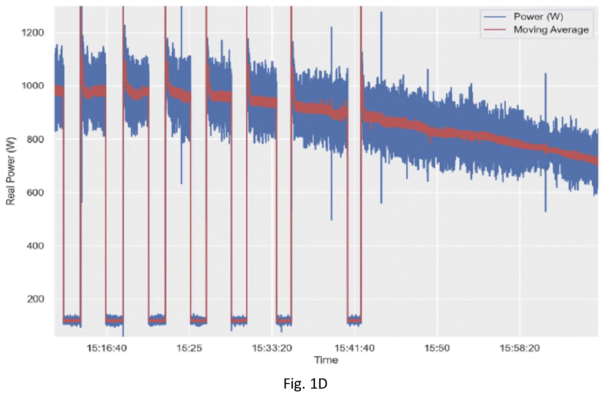

Fig. 1d shows the real power consumed by the same unit as that of Figs. 1a to 1C but with a gradual refrigerant leak depleting the refrigerant filling level over time. As can be seen, after some leakage time, standby periods stop to appear, indicating that the refrigeration unit can no longer achieve the desired cooled temperature. This also manifests itself in a reduced average power consumption.

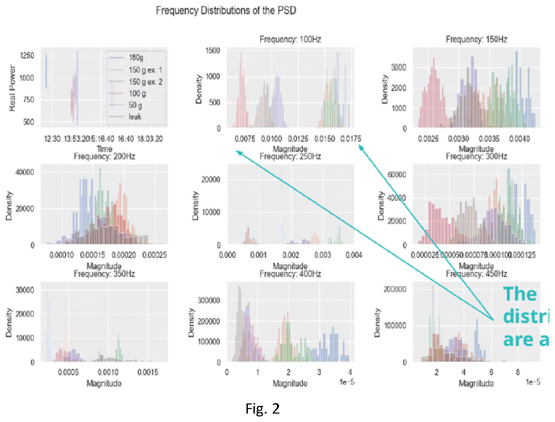

Fig. 2 shows power spectral densities of the graphs shown in Figs. 1a to 1d at frequencies that increase by 50 Hz from left to right and from top to bottom, starting with the 50 Hz base frequency used to operate the refrigerant in the top left-hand corner of Fig. 2. Put in other words, Fig. 2 shows the power spectral densities at various harmonics of the 50Hz base frequency. As can be seen, surprisingly the spectral power distributions generated at different filling states are vastly different for some harmonics and, for some harmonics, some PSDs are would even be distinguishable by simple magnitude thresholding. Embodiments use these differences in distribution to identify coolant leaks. Some embodiments use these differences in distribution to quantify coolant leaks.

To further investigate if the above findings apply to other devices having a heat pump, test were conducted a Panasonic 3-Phase air conditioning split system comprising an outdoor compressor U100P2H3E8 and indoor unit S-6010K3E. The system uses R32 refrigerant gas with a max capacity of 3.05kg. At first high a speed data sample set was gathered (used as training data) and a subsequent test set 5 months later (used as unseen data to test the trained model).

To simulate the fault condition for the purpose of gathering high speed data, gas was extracted, so that the filling state of the system adopted predetermined levels between 500g and 3000g in 250g intervals. 30s seconds of data were acquired at each filing state/level. It was found that these data, despite its sparsity, provide sufficient information for the purposes of embodiments described herein. The data sample rate used during the experiment was 2 KHz at 16-bit accuracy on 8 channels. It is emphasised that higher sampling rates and higher accuracy can be achieved. The present invention is not limited to the sampling rate and/or the accuracy used in this experiment, although it is preferred that low (e.g. the 2KHz sampling rate used in the experiment) sampling rates or low accuracy (e.g. the 16-bit accuracy used in the experiment) should be used, so that a trained model for fault detection can be deployed at the edge/so that fault detection can be performed at the edge without the need to provide cloud computing resources. In an embodiment, the minimum sampling rate required and used is the sampling rate required by Nyquist's theorem to resolve the highest harmonic that is to be analysed or quantified in the embodiment.

The data acquired in the experiments was used to train a random forest model. The fault/training data was tagged with the fault condition whilst the unseen data was entirely untagged. The features used for training the model based on the harmonic information of the signal are harmonic energy and total harmonic distortion (THD).

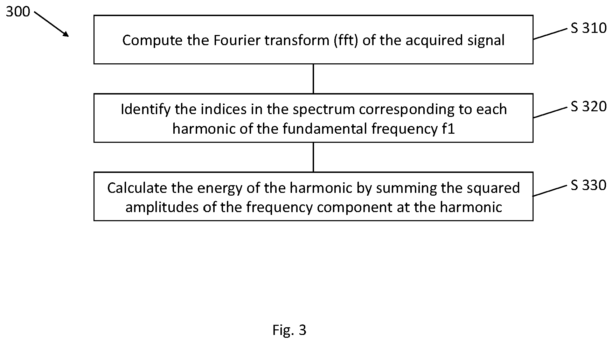

Harmonic energies are defined as the total power or energy contribution of specific frequency components (harmonics) in the signal. In one embodiment Harmonic Energies are calculated from the Fourier Transform of the signal. Fig. 3 illustrates a method 300 for calculating harmonic energies. In step S310 the Fourier transform (fft) of the acquired signal is computed. In step S320 the indices in the spectrum that correspond to each harmonic of the fundamental frequency f1 are identified and in step S330 the harmonic energy is calculated for a given harmonic by summing the squared amplitudes of the frequency components near the given harmonic. Mathematically this can be represented as: $Ek = f ∈ Harmonic Band \sum {\left|A\left(f\right)\right|}^{2}$ where Ek is the Energy of the k-th harmonic, A(f) is the Amplitude of the frequency component f and the harmonic band is a small frequency range around k·f1. In the embodiment the width of this frequency band was 1 Hz, i.e. +/- 0,5 Hz centred on the individual harmonics in question. It will be appreciated that the information content associated with a harmonic is present in the band surrounding the harmonic in which the majority of the harmonic's energy is present. In other embodiments therefore different width frequency range around k·f1 is chosen such that the majority of the harmonic energy is captured. Example of such different width frequency ranges are 2 Hz or 4 Hz, i.e. +/- 1 Hz or +/- 2 Hz respectively centred on the individual harmonics in question

THD is a measure of the contribution of all higher harmonics relative to the fundamental harmonic and can be expressed mathematically as: $THD = E 1 \sum k = 2 nEk$ where E1 is the harmonic energy of the 1^{st} harmonic/at the fundamental frequency and Ek is the harmonic energy of the k-th harmonic (k≥2).

In embodiments the other extracted features are mean and standard deviations of the channel data, i.e. of the voltages and currents on each of the three live power supply phases as well as on the neutral conductor. In particular, in some embodiments, the extracted features are:
- Mean voltage value of each channel/phase of the three phase supply power,
- standard deviation of the voltage of each channel/phase of the three phase supply power,
- mean value of the current on each channel/phase of the three phase supply power,
- standard deviation of the current of each channel/phase of the three phase supply power,
- mean voltage value on the neutral conductor,
- standard deviation of the voltage on the neutral conductor,
- mean value of the current on the neutral conductor,
- standard deviation of the current on the neutral conductor,
- the voltage of each of the 1^{st} (fundamental frequency) to the 5^{th} harmonic energy on each channel/phase,
- the current of each of the 1^{st} (fundamental frequency) to the 5^{th} harmonic energy on each channel/phase,
- the voltage of the total harmonic distortion on each channel/phase,
- the current of the total harmonic distortion on each channel/phase,
- the voltage of the 1^{st} (fundamental frequency) to the 5^{th} harmonic energy on the neutral conductor,
- the current of the 1^{st} (fundamental frequency) to the 5^{th} harmonic energy on the neutral conductor,
- the voltage of the total harmonic distortion in on the neutral conductor,
   and
- the current of the total harmonic distortion in on the neutral conductor.

It will be appreciated that the influence any of these factors determined around a given harmonic have on the performance of the classifier is at least partially dependent on the harmonic energy of the harmonic in question.

Whilst the example features listed above only consider the 1^{st} to 5^{th} harmonics, other embodiments consider further/higher harmonics. The number of the harmonics is not limited. For example, in one embodiment information of the type detailed above is extracted from electric signals at some or all of the 1^{st} to 50^{th} harmonics to provide factors in filling state or filling state fault classification. It will moreover be appreciated that, whilst the above list of factors uses information obtained from a three-phase power supply, embodiments are equally applicable to single phase power supplies and an associated detection of the above electric parameters on the single phase and/or on the null wire of a single phase cable.

Consequently, the input data used for training of the random forest model formed a [32250 x 64] matrix and the labels a vector with 32250 elements. The model was trained to classify which class/failure or filling state the investigated data relates to. The classes were balanced with SMOTE (Chawla, N. Vet al (2002-06-01)."SMOTE: Synthetic Minority Over-sampling Technique". Journal of Artificial Intelligence Research. 16: 321-357, the entirety of which is incorporated herein by reference) to ensure the presence of an equal number of training instances in each class.

The random forest model was trained based on the above parameters from a part (80%) the first data. Precision, recall and F1-score values achieved by the trained model (as determined using the 20% remainder of the first data as validation data and prior to presenting the unseen test data to the model) are summarised in Table 1.

**Table 1: Precision, recall and F1-score values of the trained random forest model for different filling states/classes**

| Filling state [g] | Precision | Recall | F1-score | Support |
|---|---|---|---|---|
| 500 | 1.0 | 1.0 | 1.0 | 1800 |
| 1000 | 0.94 | 0.94 | 0.94 | 1800 |
| 1500 | 1.0 | 1.0 | 1.0 | 1800 |
| 1750 | 0.98 | 0.98 | 0.98 | 1800 |
| 2000 | 0.97 | 0.98 | 0.98 | 1800 |
| 2250 | 0.98 | 0.97 | 0.97 | 1800 |
| 2500 | 0.91 | 0.86 | 0.86 | 1800 |
| 2750 | 0.86 | 0.92 | 0.89 | 1800 |
| 3000 | 0.94 | 0.94 | 0.94 | 1800 |

The overall accuracy achieved by the model was 0.95 (based on 16200 predictions). This accuracy was also achieved on the validation set so that the fault level is correctly detected by 95% of all predictions.

As can be seen from Table 1, the achieved recall precision, is also extremely high, with levels close to 1.0 achieved for most fault levels, in particular for fthe 500g, 1500g and 3000g filling states. The model therefore provides strong performance in predicting these classes. More general the model achieved weighted average precision, recall and F1-scores of 0.95 each. The model therefore generalised well across most fault levels.

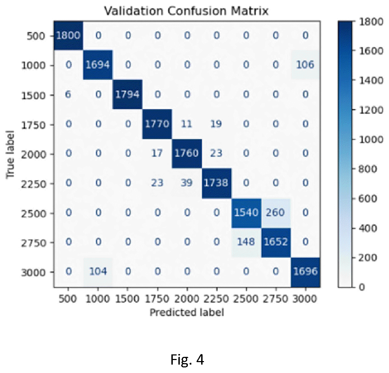

Fig. 4 shows a validation confusion matrix for the model. On the abscissa the various predicted labels/classes are shown. On the ordinate the true filling states/class labels are shown. The numbers in the matrix cells indicate how often each label has been predicted. Perfect prediction would be achieved if each cell on the diagonal of the matrix shows the maximum number of 1800 predictions. It can be seen that the model has performed very well, subject to some incorrect predictions that are also reflected in the values set out in Table 1.

Following successful validation of the random forest model as described above, the model was tested using the July 2023 unseen data. A first set of the unseen data included 750 occurrences of the 1750g fault level. The model predicted this fault level accurately in 100% of all cases.

A second set of test data also included only one dominant fault level (1500g). This fault level was predicted correctly in 745 occurrences (99.33% of all cases) and incorrectly (as the 500g fault level) in 5 occurrences (0.67% of all cases).

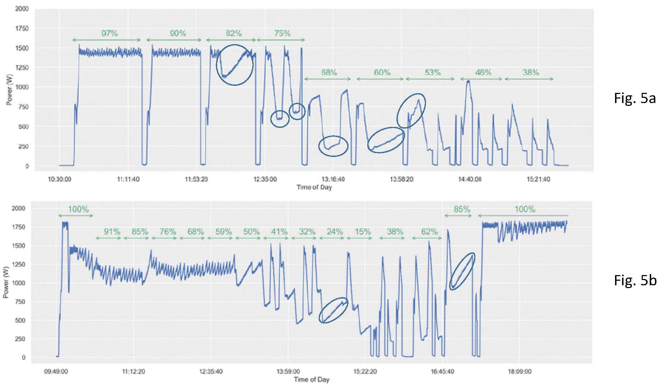

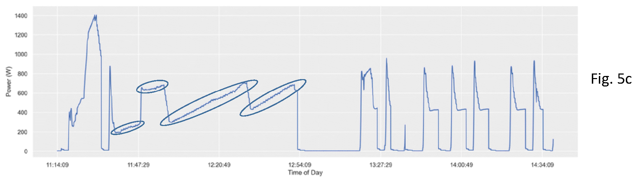

Figs. 5a to 5c show power consumption traces detected in an air conditioning unit over several hours on three different days. On the first day, 1 September 2023, the amount of heat exchange gas used in the unit is gradually reduced from a near full (97%) filling state to a filling state where only 38% of the required heat exchange gas was present. The percentage values in Figs. 5a and 5b indicate that percentage of gas present during the power cycles spanned by the horizontal arrows. It will be appreciated that, whilst Figs. 5a and 5b show power traces, current traces could equally be used in their stead, given that, under constant supply voltage conditions, the two are interchangeable. As such, the terms power trace and current trace are used interchangeably herein.

On another day, 2 September 2023, the filling state of the unit was deliberately altered using a U-shaped filling pattern.

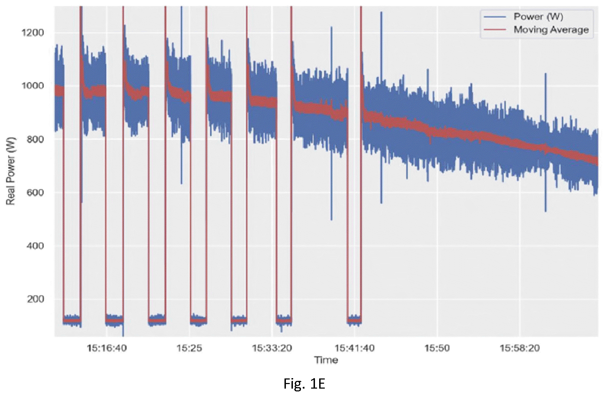

The first two power cycles shown in Fig. 5a (at 97% and 90% filling state respectively) show a steady power consumption throughout the power cycle. At lower filling states, this is no longer the case. As can be observed from Fig. 1, whilst some of the power cycles initially show steady power consumption that is comparable that observed during the first two power cycles, all lower filling state power cycles at least show a reduction in the amount of power consumed at least during the middle of the power cycle, if not across the entire power cycle. It will be appreciated that this reduction in power consumption will manifest itself in a reduction in heating or cooling performance. If a user of the air conditioning unit tries to compensate for this reduction in performance by changing the temperature settings of the unit, then an overall higher total energy consumption may results and/or a degradation in performance remains manifest.

Figs. 5a to 5c show that a common feature that gains increasing prominence in the power consumption trace with decreasing heat exchange fluid filling state is a power consumption ramp (circled in Figs. 5a to 5c) in the middle of the relevant power cycle. In embodiments this ramp is detected to indicate a reduced heat exchange fluid filling state.

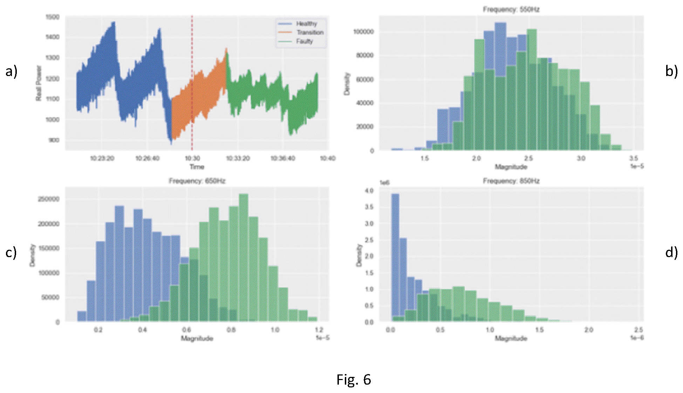

Fig. 6a shows and power trace acquired over a 20 min period on 2 September 2023 in which the filling state of the unit transitions from 100% to 91%, with the transition happening approximately at the time indicated by the vertical dashed line. The blue and green areas of the power trace are used in the further analysis shown in Figs. 6b to 6d.

Figs. 6b to 6d show the distributions of PSD magnitudes at 550Hz, 650Hz and 850Hz respectively. As can be seen from these three figures, there is a clear difference in harmonic distributions when comparing the two side of the transition. This difference in frequency distribution is what manifests itself in the above discussed ramp and is exploited in machine learning techniques of embodiments to detect reduced filling states of the units. Power traces for analysis, such as the power trace shown in Figs. 5a to 5c, are, in an embodiment, acquired by a sensing device in line with the power supply of the air conditioning unit. An advantage of using such an inline device is that the device measures only the power supplied to the air conditioning unit without overlay of any power traces of other consumer units. One example of a suitable sensing device is the Verv isolator available from Verv Energy, Sustainable Workspaces, County Hall, Belvedere Road, London, SE1 7PB, UK. It will, however, be appreciated that in other embodiments other inline devices including the required sensing electronics are used. One such other inline device is an electric power plug including the required sensing electronics.

In an embodiment, data is collected via the power signature signal readings where the real time voltage of the signal is taken in conjunction with the real time Amp reading. The amp reading is taken via a current transformer or other means in which the Amps signal can be distinguished.

In another embodiment data is collected solely via a current transformer where there power trace is derived from the Amp signal received. This system can be easily retro fitted to the mains by the devices. In this embodiment the system can simply be retrofitted to existing electrical installations with no need for changes to a buildings infrastructure.

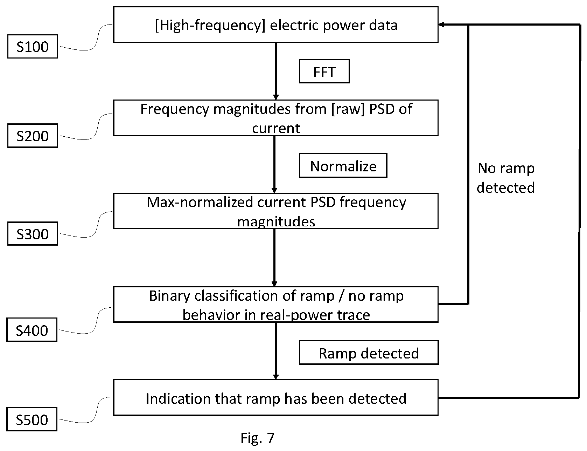

Fig. 7 shows a flow diagram of how ramp behaviour in the power trace is detected. In an embodiment power data are sampled continuously at high speed in step S100 to generate power traces for the device as shown in Figs. 5a to 5c. In one embodiment the sampling rate of the power data is about 10kHz.

The acquired time domain data is transferred into power spectral density of the current signal in the frequency domain using an FFT. As the time domain data is continuously acquired, only part of the acquired data is transformed to the frequency domain. In an embodiment the time window transformed into the frequency domain is 1 s long. In other embodiments longer or shorter time windows are chosen.

Magnitudes of the power spectrum at predetermined frequencies (in the embodiment the frequencies are multiples of 10Hz, from 10Hz to 2000Hz) are determined from the power spectral density of the current.

Optionally the Power Spectral Density is normalised in step S300. In one embodiment max-normalisation is used. More generally the purpose of normalisation, if used, is to ensure that all power spectral densities applied to a machine learning tool have/fall within the same dynamic range. Max-normalisation has the additional advantage that the original order and distance of the data points are preserved.

At least the extracted magnitudes of the power spectrum and/or the normalised PSD a provided to a trained machine learning classifier that determines if ramp is present in step S400. In one embodiment the machine learning classifier is a random forest classifier. Various ways of arriving at a classification consensus are used in embodiments. In one embodiment the various random forest each produce a probability of a ramp being present in the data under consideration. In one embodiment an average of the computed probabilities is calculated to provide an average probability as an output indication if a ramp has been detected in the data. In one embodiment the average is a simple unweighted average. In another embodiment the average is a weighted average emphasising random forests known to produce more reliable ramp detection results. In yet another embodiment the probabilities output by individual random forests are converted into individual binary detection decisions and a final detection decision for the ensemble of random forest is generated by majority vote of these individual detection decisions.

If a ramp is detected by the classifier a corresponding alert is raised in step S500. This alert may be output to a user via a user interface to enable the user to arrange servicing of the monitored unit. The user may, for example, be the owner of the monitored unit, a service provider engaged to monitor the operation of the monitored unit or a company entrusted with maintain the monitored unit. The alert may, for example, be provided to the user through an app run on a computing device, for example a mobile computing device, of the user.

As mentioned above, one machine learning classifier used in an embodiment is a random forest classifier. To train this classifier, power data of an AC unit according to Table 2 was available. The power data shown in Figs. 5a to 5c are an example of these data.

**Table 2 : Power data available for training the random forest classifier**

| **Year** | **Month** | **Hours (No Ramp)** | **Hours (Ramp)** | **Hours (Total)** |
|---|---|---|---|---|
| 2022 | Apr | 4.3 | 3.6 | 7.9 |
| 2022 | May | 1.4 | 1.1 | 2.5 |
| 2022 | Jul | 1.8 | 1.0 | 2.8 |
| 2022 | Aug | 4.7 | 1.1 | 5.8 |
| 2022 | Oct | 74.5 | 5.6 | 80.1 |
| 2023 | Jan | 15.4 | 4.5 | 20.0 |
| 2023 | Feb | 150.3 | 3.4 | 153.6 |
| 2023 | Mar | 140.4 | 0.1 | 140.5 |
| | Total | 392.8 | 20.4 | 413.2 |

As can be seen from Table 2, of the total data available over the monitored months (392.8 h) about 5% (20.4 h) included power data with ramp behaviour as shown in Fig. 1. The data was reviewed and ramps within the data were identified and manually labelled as such. The data were then separated into training data (75% of the data) and validation data (25%) of the data in four different ways:
Fold0_date: an MD5 hash of the data in the yyyy-mm-dd format was taken. If the first hex character is between 0 and 9, A or B, then the data is assigned to be training data. Otherwise the data is assigned to be validation data.
Fold1_date: As for Data separation 1 but if the first hex character is between 4 to 9 and A to F, then the data is assigned to be training data. Otherwise the data is assigned to be validation data.
Fold0_time: Data from April-December 2022 is training data. Data from January 2023 onwards is validation data.
Fold1_time: Data from April 2022 to January 2023 is training data. Data from February 2023 onwards is validation data.

In the embodiment strict data segregation in the sense that data from any given day is either assigned training data or validation data was enforced. This ensures that leakage of information between data units is minimised.

The random forest classifier was then trained using the following features:
- The maximum (absolute) value of the PSD (single feature)
- Max-normed PSD frequency magnitudes (201 features) at multiples of 10Hz in the range of 0Hz to 2kHz
- In the example training process all of these 202 above features were further means-variance normalised
wherein each data point/training/validation step only had access to PSD data calculated based on 1 second of time domain data.

Four random forest were trained, one for each of the four data folds. The F1 score for each trained tree was then calculated as:

**Table 3: F1 parameters for the four trained random forests**

| **Metric** \ **Fold** | **fold0_date** | **fold1_date** | **fold0_time** | **fold1_time** |
|---|---|---|---|---|
| **Count** | 465,672 | 296,707 | 1,130,573 | 1,058,674 |
| **F1 Score (·)** | 0.370 | 0.255 | 0.227 | 0.280 |

During training the hyperparameters of the individual forests were trained independently. The F1 score of each random forest/fold is determined using validation data sets and an average of these validation F1 scores is calculated. Training continues until this average validation F1 score no longer increases. At this point, the best set of hyperparameters used previously or currently is chosen as the final/fully trained set of hyperparameters. The F1 scores shown in Table 2 are calculated for four random forests all using this optimised set of hyperparameters. Hyperparameters optimised during hyperparameter optimisation include in one embodiment n_estimators (in the example the best choice was 100), max_depth (in the example the best choice was 10), min_sample_split (in the example the best choice was 6) and max_features (in the example the best choice was "sqrt"). As will be apparent to the person skilled in the art, these are only a small number of hperparameters available for optimisation. In other embodiments other or additional hperparameters are optimised.

In the embodiment the decision boundaries were set to 0.5. In an alternative embodiment the decision boundaries are hyperparameters that are also optimised during hyperparameter optimisation. In another alternative embodiment the decision boundaries were set above 0.5

In an alternative embodiment the hyperparameters of each fold are optimised independently and the resulting ensemble of random forests operates using different hyperparameters.

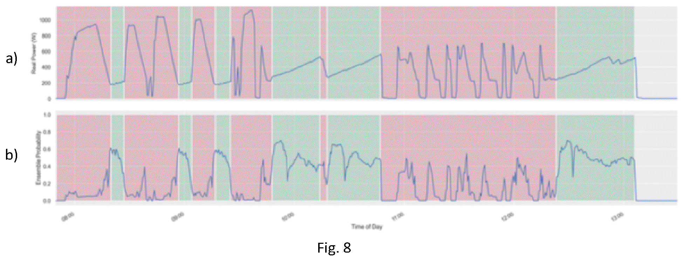

Fig. 8a) shows an example power trace from the first data set, with overlaid manually assigned ramp classifications. Fig. 8b) shows the classification performance of the four fold random forest classifier based on the power trace of Fig. 8a) and with each random forest using the same optimised hyperparameters. The Fig. 8a) power trace is part of the validation set of the fold1_time dataset. As is evident from Fig. 8b) the random forest models accurately identify ramps in the original power trace with an appropriately chosen decision boundary parameter. In this example the decision boundary parameter used was 0.58.

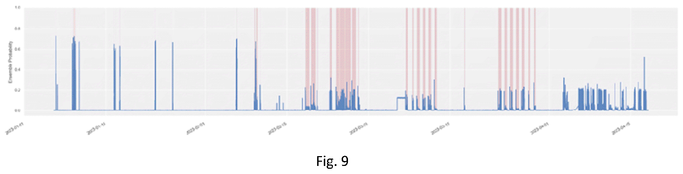

Fig. 9 shows the classification performance of the four fold random forest, with each random forest using the same optimised hyperparameters for a power trace spanning the time period 3 months and 11 days. The heat exchange gas in the monitored airconditioning unit was topped up at the end of the day one month and 3 days into the time period. As can be seen from the model performance, no ramps were detected by the model once the air conditioning unit had been fully filled with heat exchange gas.

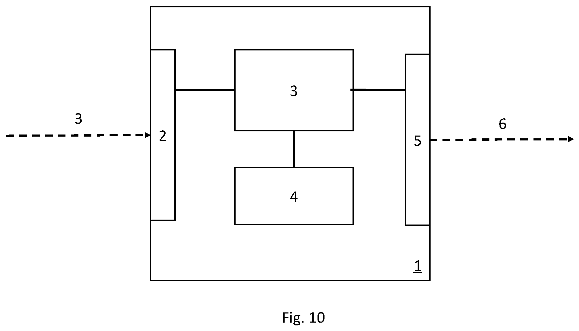

Fig.10 is a schematic illustration of a system 1 for processing a power trace, such as the power traces shown in the preceding figures, in accordance with an embodiment. The system 1 comprises an input interface 2 for receiving a current or power trace 3 from a sensor as described above, a processor 4, a memory 5 for storing computer program instructions and/or details/the parameters of the machine learning classifier and an output interface 6 for connecting to other computing devices, such as to the above described computing device of a user. The connection may be direct or, more conveniently, indirect via a network, such as a LAN or a wider area network, such as the internet.

The processor 3 is configured to, in use, obtain computer program instructions from the memory 4 and to execute the instructions. The instructions are configured to cause the processor 4, when executing the instructions to implement a method of embodiments.

The described processes can be completed with sampling rates in the order of one or more minutes. More preferably a higher data sampling rate is used. The above described ramping behaviour was observed across other manufacturers, such as Daiken and Carrier, and is not specific to Mitsubishi units and additionally pertains to any other product using a heat pump or refrigerant cycle. More generally, it pertains to equipment that may have potential for refrigerant or cooling leaks, including refrigerators and freezers.

In one embodiment it is merely desirable to detect if leakage has occurred. **In** this embodiment a less sophisticated functionality than the one described above could be used to identify ramping, which need to analyse harmonics.

In another embodiment the classifier not need be Machine learning based. Instead, a threshold tracker over time may be used to detect a leakage. The above described system is cabable of showing the percentage of coolant that has leaked. Nevertheless, a less sophisticated system that can simply alert an operator of the presence of a leak may suffice in some implementation.

Whilst in above described embodiments the sparsely available training data was successfully used in training random forest models, in other embodiments one or more of LSTM, neural networks, convolutional neural networks, recurrent neural networks, boosted random forest models, a Naïve Bayes classifier, gradient boosting and gradient boosted decision trees are used.

Further embodiments are set out in the following clauses:
1. A method for monitoring a device operating a thermodynamic cycle, the method comprising:
   obtaining at least one of a power, voltage or current signal of the device;
   determining at least one of voltage or current magnitudes at one or more harmonic frequencies of a base frequency of the signal;
   performing classification of a filling state of the device using a trained machine learning classifier and on at least one of:
      timing characteristics of the operation of the device; and
      at least one of voltage, current or power characteristics of the signal.
2. The method of clause 1, wherein the least one of voltage, current or power characteristics of the signal include a property of the determined at least one of voltage or current magnitudes at the one or more harmonic frequencies and/or a property of the signal in the time domain.
3. The method of clause 2, wherein the property of the determined at least one of voltage or current magnitudes at the one or more harmonic frequencies is one or more of:
   at least one of the determined voltage and/or the current at the at least at one or more harmonic frequencies; or
   at least one of a voltage or a current of the total harmonic distortion one or more of all of power supplying or null conductors of the device.
4. The method of clause 2 or 3, wherein the property of the signal in the time domain is at least one of:
   a moving average of the amount of power consumed by the device in an operational period; or
   mean voltage and/or current values and/or a standard deviation of voltage and/or current values on a phase or a null conductor of a power supply of the device.
5. The method of any preceding clause, wherein the timing characteristics of the operation of the device includes a length of an operational period of the device and/or a determination of the presence or absence of standby periods.
6. The method of any preceding clause, wherein the trained machine learning classifier is at least one of a decision tree classifier, a support vector machine, gradient boosting, a LSTM, a recurrent neural network, a convolutional neural network, a Naive Bayes classifier, a neural network.
7. A method for monitoring a device operating a thermodynamic cycle, the method comprising:
   obtaining at least one of a power, voltage or current signal of the device;
   calculating a frequency spectrum of the signal and obtaining magnitudes of the spectrum at a plurality of frequencies of the spectrum;
   performing classification of the presence or absence of a ramp in the trace using a classifier and at least based on the magnitudes at the plurality of frequencies; and
   outputting an indication that a ramp was detected in the trace based on a categorisation that the trace comprises a ramp.
8. The method of clause 7, wherein the classifier is a trained machine learning classifier.
9. The method of clause 7, wherein the machine learning classifier is a random forest classifier.
10. The method of clause 9, wherein the random forest classifier comprises a plurality of random forests and wherein hyperparameters in the random forests are the same.
11. The method of clause 7, wherein the step of calculating the frequency spectrum of the trace and obtaining the magnitudes of the spectrum at the plurality of frequencies of the spectrum comprises, after the frequency spectrum has been calculated, generating a normalised frequency spectrum by normalising the frequency spectrum so that all normalised spectral amplitudes fall within a predetermined range, wherein the magnitudes of the spectrum at the plurality of frequencies are magnitudes of the normalised frequency spectrum.
12. A computer program product comprising program instructions for execution by one or more processors, the program instructions, when executed by the one or more processors, causing the one or more processors to perform the method of any preceding clause.
13. The computer program product of clause 12, wherein the computer program product is a non-volatile memory storing the program instructions.
14. An apparatus for monitoring a device operating a thermodynamic cycle, the apparatus configured to:
   obtain at least one of a power, voltage or current signal of the device;
   determine at least one of voltage or current magnitudes at one or more harmonic frequencies of a base frequency of the signal;
   perform classification of a filling state of the device using a trained machine learning classifier and on at least one of:
      timing characteristics of the operation of the device; and
      at least one of voltage, current or power characteristics of the signal.
15. An apparatus for monitoring a device operating a thermodynamic cycle, the apparatus configured to:
   obtain a power or current signal of the device;
   calculate a frequency spectrum of the trace and obtain magnitudes of the spectrum at a plurality of frequencies of the spectrum;
   perform classification of the presence or absence of a ramp in the trace using a classifier and at least based on the magnitudes the plurality of frequencies; and
   output an indication that a ramp was detected in the trace based on a categorisation that the trace comprises a ramp.
16. The apparatus of clause 15, wherein the machine learning classifier is a random forest classifier.
17. The apparatus of clause 16, wherein the random forest classifier comprises a plurality of random forests and wherein hyperparameters in the random forests are the same.
18. The apparatus of clause 15, wherein the step of calculating the frequency spectrum of the trace and obtaining the magnitudes of the spectrum at the plurality of frequencies of the spectrum comprises, after the frequency spectrum has been calculated, generating a normalised frequency spectrum by normalising the frequency spectrum so that all normalised spectral amplitudes fall within a predetermined range, wherein the magnitudes of the spectrum at the plurality of frequencies are magnitudes of the normalised frequency spectrum.

While certain embodiments have been described, these embodiments have been presented by way of example only, and are not intended to limit the scope of the inventions. Indeed the novel methods and apparatus described herein may be embodied in a variety of other forms; furthermore, various omissions, substitutions and changes in the form of methods and apparatus described herein may be made without departing from the spirit of the inventions. The accompanying claims and their equivalents are intended to cover such forms of modifications as would fall within the scope and spirit of the inventions.

## Claims

1. A method for monitoring a device operating a thermodynamic cycle, the method comprising:
obtaining at least one of a power, voltage or current signal of the device;
determining at least one of voltage or current magnitudes at one or more harmonic frequencies of a base frequency of the signal;
performing classification of a filling state of the device using a trained machine learning classifier and on at least one of:
timing characteristics of the operation of the device; and
at least one of voltage, current or power characteristics of the signal.

2. The method of claim 1, wherein the least one of voltage, current or power characteristics of the signal include a property of the determined at least one of voltage or current magnitudes at the one or more harmonic frequencies and/or a property of the signal in the time domain.

3. The method of claim 2, wherein the property of the determined at least one of voltage or current magnitudes at the one or more harmonic frequencies is one or more of:
at least one of the determined voltage and/or the current at the at least at one or more harmonic frequencies; or
at least one of a voltage or a current of the total harmonic distortion one or more of all of power supplying or null conductors of the device.

4. The method of claim 2 or 3, wherein the property of the signal in the time domain is at least one of:
a moving average of the amount of power consumed by the device in an operational period; or
mean voltage and/or current values and/or a standard deviation of voltage and/or current values on a phase or a null conductor of a power supply of the device.

5. The method of any preceding claim, wherein the timing characteristics of the operation of the device includes a length of an operational period of the device and/or a determination of the presence or absence of standby periods.

6. The method of any preceding claim, wherein the trained machine learning classifier is at least one of a decision tree classifier, a support vector machine, gradient boosting, a LSTM, a recurrent neural network, a convolutional neural network, a Naive Bayes classifier, a neural network.

7. A method for monitoring a device operating a thermodynamic cycle, the method comprising:
obtaining at least one of a power, voltage or current signal of the device;
calculating a frequency spectrum of the signal and obtaining magnitudes of the spectrum at a plurality of frequencies of the spectrum;
performing classification of the presence or absence of a ramp in the trace using a classifier and at least based on the magnitudes at the plurality of frequencies; and
outputting an indication that a ramp was detected in the trace based on a categorisation that the trace comprises a ramp.

8. The method of claim 7, wherein the classifier is a trained machine learning classifier.

9. The method of claim 7, wherein the machine learning classifier is a random forest classifier.

10. The method of claim 9, wherein the random forest classifier comprises a plurality of random forests and wherein hyperparameters in the random forests are the same.

11. The method of claim 7, wherein the step of calculating the frequency spectrum of the trace and obtaining the magnitudes of the spectrum at the plurality of frequencies of the spectrum comprises, after the frequency spectrum has been calculated, generating a normalised frequency spectrum by normalising the frequency spectrum so that all normalised spectral amplitudes fall within a predetermined range, wherein the magnitudes of the spectrum at the plurality of frequencies are magnitudes of the normalised frequency spectrum.

12. A computer program product comprising program instructions for execution by one or more processors, the program instructions, when executed by the one or more processors, causing the one or more processors to perform the method of any preceding claim.

13. The computer program product of claim 12, wherein the computer program product is a non-volatile memory storing the program instructions.

14. An apparatus for monitoring a device operating a thermodynamic cycle, the apparatus configured to:
obtain at least one of a power, voltage or current signal of the device;
determine at least one of voltage or current magnitudes at one or more harmonic frequencies of a base frequency of the signal;
perform classification of a filling state of the device using a trained machine learning classifier and on at least one of:
timing characteristics of the operation of the device; and
at least one of voltage, current or power characteristics of the signal.

15. An apparatus for monitoring a device operating a thermodynamic cycle, the apparatus configured to:
obtain a power or current signal of the device;
calculate a frequency spectrum of the trace and obtain magnitudes of the spectrum at a plurality of frequencies of the spectrum;
perform classification of the presence or absence of a ramp in the trace using a classifier and at least based on the magnitudes the plurality of frequencies; and
output an indication that a ramp was detected in the trace based on a categorisation that the trace comprises a ramp.
